# EUROPÄISCHE PATENTSCHRIFT

(11) **EP 0 520 051 B1**
(45) Veröffentlichungstag und Bekanntmachung des Hinweises auf die Patenterteilung: **27.11.1996**
(21) Anmeldenummer: 92901742.4
(22) Anmeldetag: 14.01.1992
(51) Int. Cl.: C08G 63/83, C08G 63/86

(54) **VERFAHREN ZUR HERSTELLUNG EINES POLYESTERS.**
PROCESS FOR PRODUCING A POLYESTER.
PROCEDE POUR LA FABRICATION D'UN POLYESTER.

(30) Priorität: 16.01.1991 CH 107/91
(43) Veröffentlichungstag der Anmeldung: 30.12.1992
(73) Patentinhaber: RHONE-POULENC VISCOSUISSE SA, 6021 Emmenbrücke (CH)
(72) Erfinder: ENGGASSER, Josiane, CH-6020 Emmenbrücke (CH); STÄHLIN, Roland, F-69003 Lyon (FR); GESCHE, Paul, F-69340 Franche-Ville (FR)
(74) Vertreter: Herrmann, Peter Johannes
(86) Internationale Anmeldenummer: CH9200007
(87) Internationale Veröffentlichungsnummer: WO9213022

(56) Entgegenhaltungen:
- FR-A- 2 024 495
- FR-A- 2 419 949
- FR-A- 2 570 077
- Chemical Abstracts, Band 81, Nr. 20, 18 November 1974, (Columbus, Ohio, U.S.A), siehe Seite 114, Spalte 2, Zusammenfassung 122582j
- Chemical Abstracts, Band 78, Nr. 6, 12 Februar 1973, (Columbus, Ohio, U.S.A), siehe Seite 20, Spalte 2, Zusammenfassung 30502t
- Chemical Abstracts, Band 78, Nr. 6, 12 Februar 1973, (Columbus, Ohio, U.S.A.), siehe Seite 23, Spalte 2, Zusammenfassung 30540d
- Römmp Chemie Lexikon, 9. Auflage, S. 4938-4939, "Viskosität"

## Beschreibung

Die Erfindung betrifft ein Verfahren zur Herstellung eines Polyesters aus Polyethylenterephthalateinheiten, wobei ein Terephthalsäureester mit einem Glykol mittels eines Mangansalzes als Katalysator umgeestert und anschließend mittels eines germaniumhaltigen Mischkatalysators polykondensiert wird.

Die Herstellung eines Polyesters aus Polyethylenterephthalateinheiten ist bekannt. Hierzu werden üblicherweise eine Säurekomponente wie Terephthalsäure und eine Glykolkomponente wie Ethylenglykol direkt verestert oder einer Umesterungsreaktion unterworfen. In beiden Fällen sind Katalysatoren erforderlich, von welchen sich eine Kombination aus Mangan / Antimon als am geeignetsten erwiesen hat.

Infolge der schärferen Gesetzgebungen in zahlreichen Industriestaaten wird die Entsorgung des als toxisch erkannten Antimons immer akuter. Es sind daher zahlreiche Lösungen versucht worden einen antimonfreien Polyester herzustellen.

So werden von R. Gutmann, Text. Prax. Int., 44 (1), 29/30, 33, 1989 die Verwendung von Ti-,Ge- oder Al-glykolat anstelle von Antimonglykolat vorgeschlagen.

Dabei werden definierte Glykolate hergestellt. Die Herstellung von Glykolaten in einem separaten Verfahrensschritt in einer konstanten reinen Qualität ist sehr aufwendig. Über den Zeitpunkt und Ort der Zugabe des Polykondensationskatalysator ist keine Angabe zu entnehmen.

Aus der DE-A-16 45 496 ist ein Verfahren zur Herstellung von Polyestern ohne Antimon bekannt, in welchem in Ethylenglykol lösliche Cerverbindungen unter gleichzeitiger Verwendung von organischen Phosphorderivaten eingesetzt werden. Die Zugabe einer bestimmten organischen Phosphorverbindung zusammen mit einer löslichen Cerverbindung vor der Polykondensation, brachte gegenüber einer unter Zugabe von üblichen Phosphorverbindungen verbesserten Weißgrad.

Aufgabe der Erfindung ist es, Antimon als Polykondensationskatalysator bei der Herstellung von Polyestern durch einen Katalysator zu ersetzen, ohne daß die anderen Eigenschaften wie thermische Stabilität., Thermooxidationsstabilität und Photostabilität verschlechtert werden.

Eine weitere Aufgabe der Erfindung ist es, ein Verfahren zur Herstellung eines Polyesters für Flaschen, Folien und Filamente bereitzustellen, der keine toxischen Verbindungen (Katalysatorreste) enthält.

Zum Erfindungsgegenstand ähnliche Verfahren werden in FR-A-2 419 949 und CA 81(20):122 582 j beschrieben.

Eine weitere Aufgabe ist es, gleichzeitig den Weißgrad des Polyesters zu erhöhen.

Die Aufgabe wird erfindungsgemäß dadurch gelöst, daß 80 - 99 Gew.-% des aktiven Mangansalzes mittels Phosphorverbindungen blockiert werden, und das freibleibende Mangan nach dem Zusatz von 10 -100 ppm Ge am Ende der Glykolphase als Mischkatalysator zur Katalyse der Polykondensation verwendet wird, wobei das Molverhältnis P/Mn < 1 ist.

Ein wesentlicher Vorteil eines antimonfreien Katalysators ist darin zu sehen, daß keine Schwermetalle im Polymer selbst vorliegen, aber auch daß keine auswaschbaren toxischen Antimonverbindungen in das Abwassersystem und in die Umwelt gelangen können.
Ein weiterer Vorteil ist die Verwendung von anorganischen Phosphorverbindungen, die im Gegensatz zu den organischen nicht toxisch sind.

Ein weiterer Vorteil ist, daß nur geringste Mengen an Phosphor zur Blockierung des Mangans erforderlich sind.

Das Molverhältnis P/Mn < 1 liegt weit unter bekannten Molverhältnissen. Dadurch daß ein Teil des Mn noch frei bleibt, wird eine geringe Polykatalysatormenge benötigt. Das hat den Vorteil, daß weniger Fremdstoffe im Polymer vorliegen, welche bei einer Weiterverarbeitung in den meisten Fällen stören.

Die Zugabe eines Germaniumkomplexes unmittelbar vor der Vakuumphase hat den Vorteil, den Diethylenglycolgehalt zu vermindern, weil er in ein glykolarmes Milieu eingespeist wird.

Als Germaniumkatalysator hat sich ein Germaniumsalz, bestehend aus einem Alkalikation, insbesondere Natrium oder Kalium als am besten geeignet erwiesen.

In der Polykondensationsphase liegen bevorzugt 10 - 100 ppm Mn und 10 - 100 ppm Ge vor.

Das resultierende Polyestergranulat weist eine Remission von grösser als 52 %, gemessen bei einer Wellenlänge von 426 nm, auf. Eine so hohe Remission gibt einen überraschend guten Weißgrad.

Der Polyester ist geeignet zur Herstellung von Flaschen, Folien und Filamenten.

Die Erfindung soll anhand von Beispielen näher erläutert werden.

Es gelten für alle Beispiele der folgende Ansatz sowie die Verfahrensschritte 1-4.

Der Autoklav wird beladen mit:
- Dimethylterephthalat :: 51,5 mol
- Ethylenglykol :: 98,2 mol
- Manganacetat · 2 Hydrat:: 90 ppm Mn (bezogen auf das Dimethylterephthalat)

### 1. Umesterung

Die Umesterungsreaktion erfolgt im gerührten Autoklav (40 U/min) im Temperaturbereich von 160 bis 230°C in einem Zeitintervall von 120 min. Dabei wird das Methanol über eine Trennkolonne quantitativ abdestilliert.

### 2. Zusätze

Die Zusätze werden im Temperaturbereich der Reaktionsmasse zwischen 230°C und 235°C zugegeben. Als Zusätze werden 0,4 % TiO₂ als Mattierungsmittel und 0,075 % Antioxidans (Irganox 1010 ^{R} (Markenname der Firma CIBA-GEIGY, Basel, CH)), beide in Ethylenglykol suspendiert, zugegeben.

### 3. Ethylenglykolphase

Die Ethylenglykolphase erfolgt im Temperaturbereich von 230 bis 245°C in ungefähr 30 min.

### 4. Polykondensation

Die Polykondensationsreaktion erfolgt im Temperaturbereich von 245 bis 285°C während 200 min, indem in einem ersten Schritt ein progressives Vakuum (1000 → 50 mbar) in einem Zeitinterwall von 40 min erstellt wird und in einem zweiten Schritt wird eine Hochvakuumphase p < 1 mbar eingeleitet.

### Beispiel 1 (Vergleichsbeispiel)

In Beispiel 1 erfolgt die Zugabe in üblicher Konzentration von 334 ppm Antimon (als Antimontrioxid) nach der Blockierung des Umesterungskatalysators mittels phosphoriger Säure im Molverhältnis P/Mn von 1,2.

### Beispiel 2 (Vergleichsbeispiel)

In Beispiel 2 erfolgt überhaupt keine Blockierung des Umesterungskatalysators.

### Beispiel 3 und 4

In Beispielen 3 und 4 wird nach der Methanolphase der Mangan-Umesterungskatalysator bei einer Temperatur der Reaktionsmasse von 230°C mittels einer P-Verbindung (H₃PO₃) im Molverhältnis von P/Mn = 0,66 resp., 0,89 blockiert. Das frei gebliebene Mangan wirkt als Polykondensationskatalysator.

### Beispiele 5 bis 7

In den Beispielen 5 bis 7 wird der Umesterungskatalysator mit einer Verbindung (H₃PO₃) im Molverhältnis von P/Mn = 0,89 resp. 0,83 blockiert.

Am Ende der Glykolphase, d.h. unmittelbar vor der Vakuumphase erfolgt die Zugabe des Polykondensationskatalysators Natriumgermanat. 1 Hydrat in Ethylenglykol gelöst. Das frei gebliebene Mangan und das Germanium wirken als Mischkatalysator.

Eine zusammenfassende Darstellung der Ausführungsbeispiele geht aus Tabelle 1 hervor.

**Tabelle 1:**

| **Ausführungsbeispiele** | | | | | | |
|---|---|---|---|---|---|---|
| Beispiele | Mangan (ppm) | Molverhältnis P/Mn | Antimon (ppm) | Germanium (ppm) | Inganox 1010 (%) | TiO₂(%) |
| 1* | 90 | 1,2 | 334 | -- | -- | 0,4 |
| 2* | 90 | | -- | -- | 0,075 | 0,4 |
| 3* | 90 | 0,66 | -- | -- | 0,075 | 0,4 |
| 4* | 90 | 0,89 | -- | -- | 0,075 | 0,4 |
| 5 | 90 | 0,89 | -- | 75 | 0,075 | 0,4 |
| 6 | 90 | 0,89 | -- | 60 | 0,075 | 0,4 |
| 7 | 90 | 0,83 | -- | 75 | 0,075 | 0,4 |

| | | | | | | |
|---|---|---|---|---|---|---|
| * Diese Beispiele sind Vergleichsbeispiele | | | | | | |

Die Eigenschaften des Polymers sind in Tabelle 2 dargetellt.

**Tabelle 2:**

| Erhaltene Eigenschaften | | | | | | |
|---|---|---|---|---|---|---|
| Beispiele | VI | CEG (mol/t) | DEG (%) | Rem bei 426 nm (%) | Tox (°C) | Zeit(min) der Polykondensationsphase |
| 1 | 74,0 | 22 | 0,7 | 52,0 | 258 | 200 |
| 2 | 76,5 | 23 | 0,65 | 41,0 | 265 | 135 |
| 3 | 75,0 | 20 | 0,50 | 48,0 | 268 | 175 |
| 4 | 80,0 | 19 | 0,50 | 52,0 | 268 | 265 |
| 5 | 80,0 | 20 | 1,1 | 58,5 | 265 | 240 |
| 6 | 75,0 | 20 | 1,0 | 58,5 | 268 | 250 |
| 7 | 74,0 | 22 | 1,0 | 59,5 | 268 | 200 |

Aus diesen Versuchen geht hervor, daß die besten Polymereigenschaften und eine ähnliche Polykondensationszeit wie beim Vergleichsbeispiel 1 mit dem Beispiel 7 erhalten werden.

Vergleich des Weißgrades gemessen am Faden dtex 76f30 zwischen den Beispielen 1 und 7.

| | Beispiel 1 | Beispiel 7 |
|---|---|---|
| Remission bei 426nm(%) | 81,8 | 83,7 |

Es bedeuten:
- VI :: Viskositätsindex (gemessen in Phenol/Dichlorbenzol 1:1)
- CEG:: Carboxylendgruppen
- REM:: Remission bei 426 nm
- Tox:: Temperatur bei welcher die oxydative Zersetzung einsetzt.
- DEG:: Diethylenglykol

## Patentansprüche

1. Verfahren zur Herstellung eines antimonfreien Polyesters für Flaschen, Folien und Filamente, mit einem Viskositätsindex (VI) von 74-80 aus Polyethylenterephthalateinheiten, wobei ein Terephthalsäureester mit einem Glykol mittels eines Mangansalzes als Katalysator umgeestert und anschließend mittels eines germaniumhaltigen Mischkatalysators polykondensiert wird, dadurch gekennzeichnet, daß 80 - 99 % des Mangansalzes mittels einer anorganischen Phosphorverbindung blockiert werden, und das freibleibende Mangan und ein Germaniumsalz, das unmittelbar vor der Vakuumphase zugesetzt wird, als Mischkatalysator zur Katalyse in der Polykondensation in einer Konzentration von 10 - 100 ppm Ge und 10 -100 ppm Mn (bezogen auf das Dimethylterephthalat) vorliegen, wobei das Molverhältnis P/Mn < 1 ist.

## Claims

1. Process for the preparation of an antimony-free polyester for bottles, sheets and filaments, having a viscosity index (VI) of 74-80, composed of polyethylene terephthalate units, in which process a terephthalic acid ester is transesterified with a glycol using a manganese salt as catalyst and is then subjected to a polycondensation reaction using a germanium-containing mixed catalyst, characterised in that 80-99 % of the manganese salt are blocked by means of an inorganic phosphorus compound, and the manganese remaining free and a germanium salt, which is added immediately prior to the vacuum stage, are present as mixed catalyst for the catalysis in the polycondensation reaction in a concentration of 10-100 ppm Ge and 10-100 ppm Mn (based on the dimethyl terephthalate), the P/Mn molar ratio being < 1.

## Revendications

1. Procédé pour la fabrication d'un polyester sans antimoine pour bouteilles, pour films et filaments avec un index de viscosité (vi) de 74 - 80 constitué d'unités de polyéthylènetéréphtalate, ou un ester de l'acide téréphtalique est transestérifié avec du glycol au moyen d'un sel de manganèse en tant que catalyseur et par la suite est polycondensé au moyen d'un catalyseur mixte contenant du germanium, caractérisé en ce que 80 - 90 % du sel de manganèse est bloqué au moyen d'un composé anorganique du phosphore, et que le manganèse libre et un sel de germanium, lequel est ajouté juste avant la phase de vide en tant que catalyseur mixte pour la catalyse de la polycondensation avec une concentration de 10-100 ppm Ge et 10 - 100 ppm Mn relatif au diméthyltéréphtalate, ou le rapport molaire P/Mn est < 1.
